# EUROPÄISCHE PATENTANMELDUNG

(11) **EP 2 647 540 A1**
(43) Veröffentlichungstag der Anmeldung: **09.10.2013**
(21) Anmeldenummer: 12462007.1
(22) Anmeldetag: 03.04.2012
(51) Int. Cl.: B61D 27/00, B61D 3/20, B60L 1/04

(54) **Energieversorgungssystem für Kühlcontainer**

(71) Anmelder: Floyd ZRt, 1138 Budapest (HU)
(72) Erfinder: Bogdán, András, 1046 Budapest (HU); Grams, Elmar, 1121 Budapest (HU); Ludchen, János, 2096 Üröm (HU)
(74) Vertreter: Kovacs, Ivanné

(57) **Zusammenfassung**

Die Erfindung betrifft ein Energieversorgungssystem zur Stromversorgung von im Schienenverkehr transportierten Kühlcontainern (2).

Das Wesen der Erfindung liegt darin, dass das Heizkabel (3) des Zugheizsystems der elektrischen Lokomotive (1) dem Eingang eines auf dem Gestell jedes den Kühlcontainer (2) tragenden Containertragwagens angeordneten, den Strom und Spannung des Heizsystem für die Kühlcontainer (2) benötigten Strom und Spannung umwandelnden Transformators (4) angeschlossen wird, und der Ausgang des Transformators (4) wird durch entsprechende Verbindungskabel (5) dem Kühlcontainer (2) zugeführt.

## Beschreibung

### Gegenstand und Anwendung der Erfindung

Die vorliegende Erfindung betrifft ein Energieversorgungssystem für Kühlcontainer, das die Energieversorgung von im Schienenverkehr auf Containertragwagen transportierten Kühlcontainern preisgünstig und einfach zu sichern vermag.

Containertragwagen sind im Allgemeinen kombinierte Transportmittel, die praktisch während der gesamten Transportzeit mit Energie versorgt werden müssen, um die Temperaturen innerhalb der Container durchgehends entsprechend niedrig zu halten

### Der Stand der Technik

Aus dem Dokument CH699573 A1 ist ein Güterzug bekannt, der aus Kühlcontainer und/oder Tankcontainer tragenden Containertragwagen besteht. Die Containertragwagen verfügen auf beiden Stirnseiten über entsprechende elektrische Steckverbindungen, und die benachbarten Containertragwagen können durch entsprechende elektrische Leitungen miteinander verbunden werden. Mit Hilfe dieser Steckverbindungen kann dann das Kühlaggregat des Kühlcontainers bzw. bei Tankcontainern die Heizung angeschlossen werden. Die elektrische Energie wird mittels eines Stromabnehmers von der Oberleitung der Bahn abgenommen oder wird von einem Dieselgenerator im Zug erzeugt. Dadurch wird die Energieversorgung der Container gesichert.

Ein Nachteil dieser Lösung ist, dass die elektrischen Leitungen auf dem Containertragwagen kaum standardmäßig angebracht werden können, und bei eventueller Beschädigung des Generators durch den Stromausfall der gesamte Warenbestand des Güterzuges in Gefahr gerät. Bei einem anderen Ausführungsbeispiel wird die auf dem Kühlcontainer angebrachte Kühleinheit von einem von Gasöl getriebenen Generator betrieben. Diese Lösung hat jedoch den Nachteil, dass bei einer längeren Transportzeit die Energieversorgung wegen der geringen Volumengröße des Treibstoffbehälters nicht gewährleistet werden kann, es müssen also unterwegs Pausen einlegen werden, um den Treibstoffbehälter wieder aufzufüllen. Wegen der für den Schienentransport gültigen strengen Vorschriften ist die Auffüllung der Tanker mit Gasöl äußerst schwierig, wobei auch noch die Gefahr von Entwendung durch Unbefugte in Berücksichtigung genommen werden muss.

Bisher wurden noch keine Güterwagen für den Schienentransport entwickelt, bei denn die Energieversorgung von Kühlcontainern einfach gesichert werden könnte.

### Die Aufgabe der Erfindung und die Lösung der Aufgabe

Die Aufgabe der Erfindung ist es, ein Energieversorgungssystem für den Schienentransport zu entwickeln, bei dem die auf Güterwagen angebrachten Kühlcontainer während der gesamten Lieferzeit durchgehend mit elektrischer Energie versorgt werden können.

Die Anerkennung der Erfindung liegt darin, dass die Kühlcontainer vom Heizungssystem der elektrischen Lokomotive des Zuges mit Strom versorgt werden können.

Die Erfindung betrifft also ein Energieversorgungssystem, das Kühlcontainer im Schienentransport mit Strom versehen kann.

Das Wesen der Erfindung besteht darin, dass das Heizkabel des Zugheizsystems der elektrischen Lokomotive dem Eingang des auf dem Gestell des den Kühlcontainer tragenden Containertragwagens angeordneten, den im Heizsystem verwendeten Strom mindestens in den zur Inbetriebhaltung notwendigen Wert umwandelnden Transformators angeschlossen wird, und sein Ausgang wird durch das Energieverbindungskabel dem Kühlcontainer hingeführt.

Das erfindungsgemäße Energieversorgungssystem als einheitliches System sichert während der gesamten Lieferzeit eine ununterbrochene Stromversorgung für den Kühlcontainers.

Das erfindungsgemäße Energieversorgungssystem wird nachfolgend durch ihre vorteilhaften Ausführungsbeispiele mit Hilfe der Zeichnungen näher erläutert.

Es zeigen:
- Figur 1: die Befestigung des Kühlcontainers auf einem 40' Containertragwagen
- Figur 2: die Befestigung des Kühlcontainers auf einem 80' Containertragwagen
- Figur 3: die Befestigung des Kühlcontainers auf einem 40' Containertragwagen

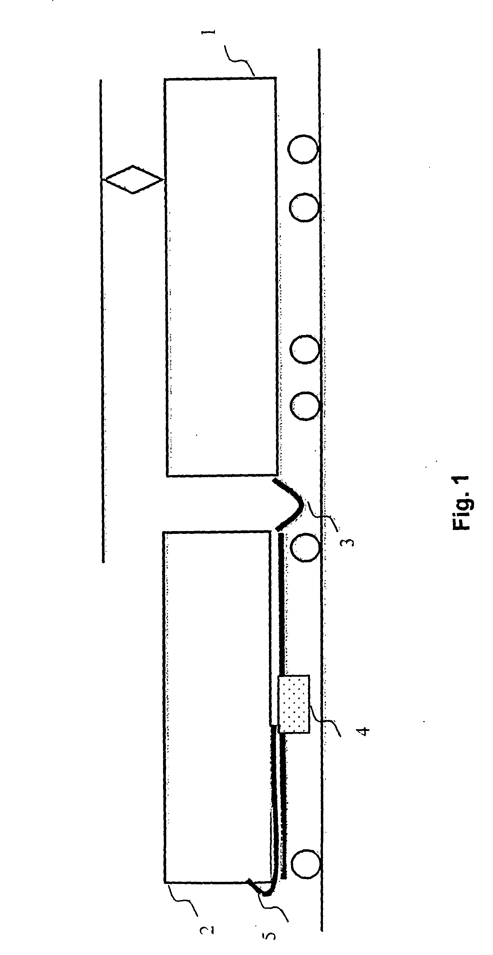

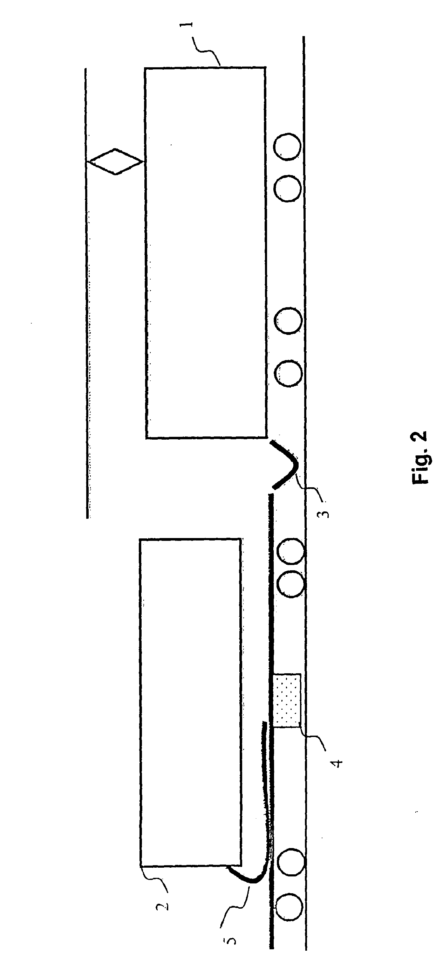

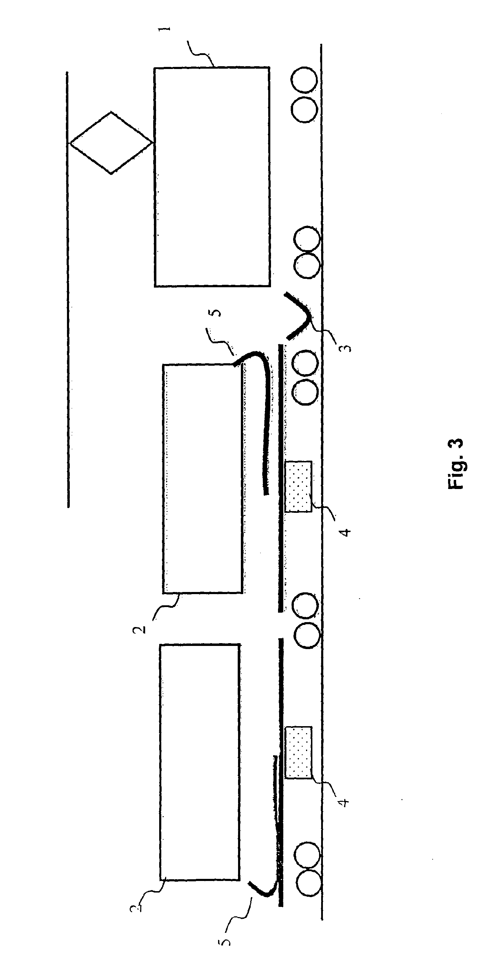

Auf Figur 1, Figur 2 und Figur 3 werden drei Ausführungsbeispiele des erfindungsgemäßen Energieversorgungssystems für Unterbringung auf verschiedenen Containertragwagen gezeigt. Die Kühlcontainer 2 werden erfindungsgemäß vom Heizsystem der elektrischen Lokomotive 1 mit Strom versorgt. Die elektrische Energie wird durch das Heizkabel 3 zum an dem Gestell des Güterwagens angeordneten Eingang eines Transformators 4 zugeführt, und der Ausgang des Transformators 4 wandelt den zum Heizsystem benutzten Strom in einen dem Stromverbrauch des Kühlcontainers entsprechenden Stromwert um. Der Strom wird dann vom dem Ausgang des Transformators 4 durch das Verbindungskabel 5 zu den zu kühlenden Kühlcontainern 2 geführt. Das erfindungsgemäße Energieversorgungssystem wird durch die elektrische Energie des Heizkabel der elektrischen Lokomotive gespeist, und die Energieversorgung der einzelnen Kühlcontainer 2 mit elektrischer Energie wird durch die auf den einzelnen Güterwagen angeordneten Energiekonverter, in der Ausführungsbeispiel durch den Transformator 4 gelöst.

Der Vorteil des erfindungsgemäßen Energieversorgungssystems ist, dass die Versorgung der Containertragwagen mit elektrischer Energie während der gesamten Fahrzeit durchgehends gesichert wird.

Ein weiterer Vorteil ist, dass das erfindungsgemäße Energieversorgungssystem die Kühlcontainer 2 in einem einheitlichen System speisen und transportieren können, von Abfahrt an bis hin zur Ankunft auf dem Bestimmungsort, seine Behandlungs- und Erhaltungskosten sind niedrig, und das erfindungsgemäße Energieversorgungssystem kann darüber hinaus frei und unbehindert, ohne jegliche Einschränkungen in allen europäischen Ländern auf allen Bahnlinien verwendet werden.

## Patentansprüche

1. Energieversorgungssystem zur Stromversorgung von im Schienenverkehr transportierten Kühlcontainern (2), ***dadurch gekennzeichnet, dass*** das Heizkabel (3) des Zugheizsystems der elektrischen Lokomotive (1) dem Eingang eines auf dem Gestell jedes den Kühlcontainer (2) tragenden Containertragwagens angeordneten, den Strom und Spannung des Heizsystem für die Kühlcontainer (2) benötigten Strom und Spannung umwandelnden Transformators (4) angeschlossen wird, und der Ausgang des Transformators (4) wird durch entsprechende Verbindungskabel (5) dem Kühlcontainer (2) zugeführt.

2. Energieversorgungsystem nach Anspruch 1, ***dadurch gekennzeichnet, dass*** es während der gesamten Lieferzeit eine durchgehende elektrische Energieversorgung für jeden Kühlcontainer (2) sichert.

3. Energieversorgungsystem nach Anspruch 1, ***dadurch gekennzeichnet, dass*** es in einem einheitlichen System verwirklicht wird.
